# EUROPEAN PATENT APPLICATION

(11) **EP 2 184 870 A1**
(43) Date of publication of application: **12.05.2010**
(21) Application number: 08019672.8
(22) Date of filing: 11.11.2008
(51) Int. Cl.: H04J 3/16, H04J 3/14

(54) **System and method for communicating network management information**

(71) Applicant: Nokia Siemens Networks OY, 02610 Espoo (FI)
(72) Inventor: Lv, Li Ping, 200233 Shanghai (CN); Zhang, Hao, 200233 Shanghai (CN); Zhou, Geng, 200233 Shanghai (CN)
(74) Representative: Bruglachner, Thomas E.

(57) **Abstract**

The present invention has disclosed a method, a system and a machine-readable medium for communicating network management information over a communication network. The method comprises creating a traffic information according to network management information in at least one communication system, transmitting the traffic information over the optical communication network; and receiving and recovering the traffic information in at least another communication system, wherein said at least another communication system has the similar encoding and decoding structure as that of said at least one communication system. With the present invention, network management information can be passed to a remote communication system without extra Ethernet network.

## Description

### TECHNICAL FIELD OF THE INVENTION

This invention relates generally to the field of optical communication and, more particularly to a system and method for communicating network management information in optical communication network environments.

### BACKGROUND OF THE INVENTION

The field of optical communication has become increasingly important in today's society. In particular, the ability to quickly and effectively manage a remote communication system through any suitable communication network, such as other vendors' SDH/SONET, presents a significant obstacle for component manufacturers, system designers and network operators. This obstacle is made even more difficult due to the plethora of diverse communication system based on different communication protocols that exist in the current optical communication networks. Because of the many communication system, network management information cannot pass through the communication network to a remote destination.

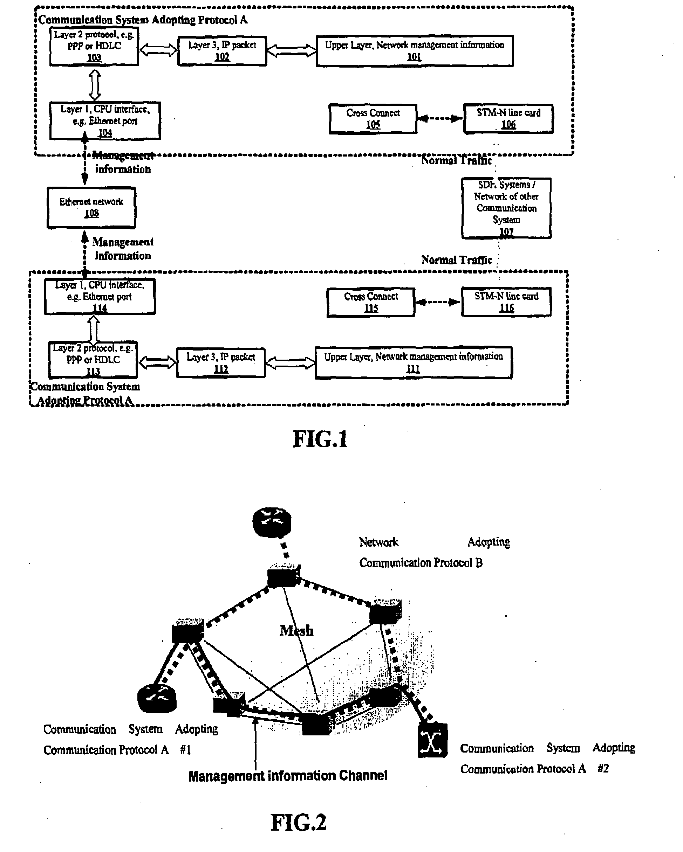

Particularly, as shown in FIG.1, in most cases, there exist two kinds of information in communication system adopting communication protocol A, that is, network management information and normal traffic information. Generally, normal traffic can be delivered in form of bit stream through other communication system's Synchronous Digital Hierarchy (SDH) system or common communication network to a remote destination. However, unlike normal traffic, network management information can not be transferred because network management information of different communication system is based on different communication protocols. As a result, the network management information can not be directly delivered to another remote system having different protocol as normal traffic information. In this regard, new hardware devices, such as extra Ethernet network 108 as shown in FIG.1, are added to perform the transmission of network management information.

As new communication technologies become available to the consumer, new method and systems need to be developed to optimize the communication of the network management information.

### SUMMARY OF THE INVENTION

In accordance with the present invention, disadvantages and problems associated with previous techniques for communicating the network management information in Multiple communication systems environments in an optical communication network may be reduced or eliminated.

One aspect of this invention is to provide a method of communicating information over an optical communication network, a plurality of communication system accessing the optical communication network via different nodes, comprising the step of: creating traffic information according to network management information or transforming the format of the network management information to be the same as that of other traffic information in at least one communication system; transmitting the transformed network management information over the optical communication network; and receiving the transformed network management information and recovering the received information to be the network management information having original format in at least one of another communication systems, wherein said at least one of another communication systems has the similar information processing structure as that of said at least one of another communication systems. The communication protocols adopted by multiple communication systems could be different. Creating traffic information according to network management information further comprises adapting the bit rate of the network management information and mapping the adapted network management information into the traffic information, wherein the mapping is known method to the skilled in the art to transforming the information format.

According to another aspect of the present invention an optical communication system is provided that includes an information creation unit, an information transmission unit and an information recovery unit. The information creation unit is configured to cerate network management information into traffic information in at least one communication system. The information transmission unit is configured to transmit the traffic information over the optical communication network; and the information recovery unit is configured in at least another communication system, to receive and recover the traffic information, wherein said at least another communication system has the similar information processing structure as that of said at least one communication system.

In one embodiment of this aspect of the invention said information creation unit further comprises a bit rate adapter operable to adapt the bit rate of the network management information and a mapper operable to map the adapted network management information into the traffic information.

In a preferred embodiment of this aspect of this invention, the bit rate of the adapted network management information may be 2.048Mbps, 1.544Mbps, 34.368Mbps, 44.736Mbps, or 10/100Mbps. If the bit rate of the adapted network management information is 2.048Mbps, 1.544Mbps, 34.368Mbps, or 44.736Mbps, Multi-channel Controller or Serial Communication Controller can be employed as the CPU interface to control and output the bit stream, and Plesiochronous Digital Hierarchy mapper can be adopted to perform the mapping. In case the bit rate of the adapted network management information is 10/100Mbps, then Fast Communication controller can be adopted as the CPU interface, and Ethernet over SDH/SONET mapper may be employed to implement the mapping. Furthermore, in one embodiment of this invention Generic Framing Procedure and Link Capacity Adjustment scheme are employed for realizing the Ethernet over SDH/SONET mapper.

In accordance with another aspect of this invention, there is provided machine-readable medium including logic for communicating information over a communication network, and a plurality of communication system accessing the optical communication network via different nodes, the logic operable to: create a traffic information according to a network management information in at least one communication system; transmit the traffic information over the optical communication network; and receive and recover the traffic information in at least another communication system, wherein said at least another communication system has the similar encoding and decoding structure as that of said at least one communication system.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its feature and advantages, reference is now made to the following description, taken in conjunction with the accompanying figures, wherein like reference numerals represent like parts, in which:

FIG. 1 is a block diagram of an optical communication network system having extra Ethernet network according to the prior art.

FIG. 2 represents the communication of network management information over MESH network according to one embodiment of the present invention;

FIG. 3 shows the communication of network management channel in STM-N;

FIG. 4 is a block diagram representing the system for communicating network management information according to one preferred embodiment of the present invention;

FIG. 5 illustrates E1/T1 Mapper according to one embodiment of the present invention;

FIG. 6 illustrates E3/T3 Mapper according to another embodiment of the present invention; and

FIG. 7 illustrates an Ethernet over SDH/SONET Mapper according to one further embodiment of the present invention.

### DETAILED DESCRIPTION OF THE INVENTION

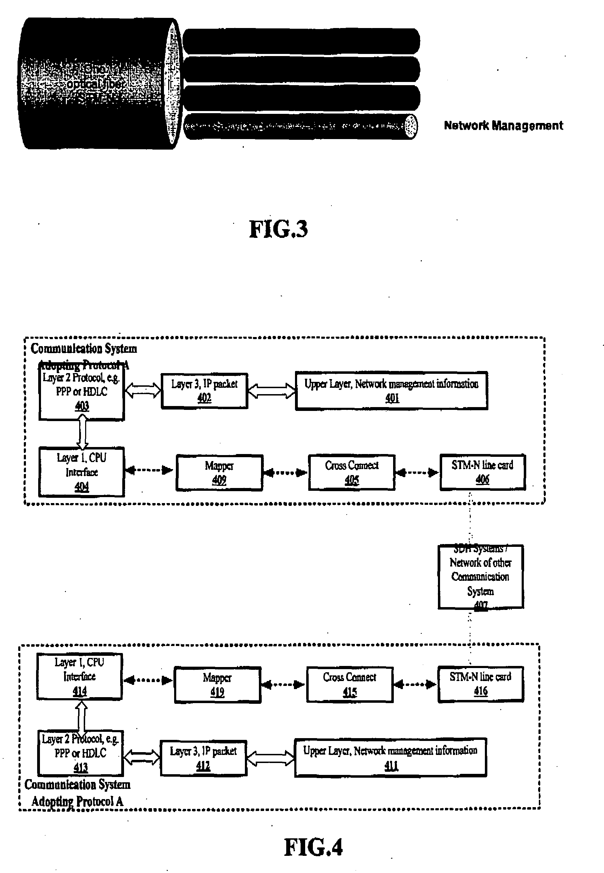

For a brief view of the technical solution of the present invention, Fig. 2 and 3 show the communication of network management information over MESH network.

In FIG. 2, a plurality of communication systems access the MESH network via various nodes. As is shown, system 1# and system 2#, both provided by vendor A, are at different nodes of the MESH network. The network management information is transferred via the management information channel, which is denoted by the real line in the drawing.

FIG. 3 shows how the management information is transmitted according to one embodiment of the invention. Network management information is transformed into service D, which is in the same form as normal traffic, such as service A, B and C, and then transferred via optical fiber together with service A, B and C.

Modifications, additions or omissions may be made to the system without departing from the scope the invention. For example, system 2# in FIG 2, can also be provided by another vendor, such as vendor B, as long as system 2# has the same encoder or decoder structure as system 1#.

Now referring to FIG. 4, which provides a detailed description of one preferred embodiment of the present invention. As is shown, network management information from the upper layer 401 is passed into the Network Layer 402 and is enveloped into IP packets, and then enters the Data Link Layer 403. In Data Link Layer, IP packets are divided into different kinds of frames that can be delivered by Physical Layer 404 in accordance with Peer-to-Peer Protocol or High Data Link Control, and then enter Physical Layer 404. Therein the bit rate of the preprocessed network management information is adapted by CPU. Based on the diverse network situations and the various requirements, the adapted bit rate can be 2.048Mbps (E1), 1.544Mbps (T1), 34.368Mbps (E3), 44.736Mbps (T3), or 10/100Mbps (Fast Ethernet). The adapted network management information is then output in form of bit stream via CPU interface 404.

Generally, CPU has many versatile interfaces that can set many modes and different bit rates. In one preferred embodiment, the CPU output interface can be Multi-channel controller (MCC), Serial communication controller (SCC) or Fast communication Controller (FCC). To be specific, if the adapted bit rate is 2.048Mbps (E1), 1.544Mbps (T1), 34.368Mbps (E3), 44.736Mbps (T3), Multi-channel controller or Serial communication controller is employed as CPU interface; if the adapted bit rate is 10/100Mbps (Fast Ethernet), Fast communication Controller is usually implemented as CPU interface. Its bit rate can be configured by means of CPU register.

After the network management information having its bit rate adapted, this information is then output to the mapper 409 that is connected with CPU interface 404. Herein, in accordance with the different bit rates, suitable mappers are adopted to perform the mapping of the network management information. In one preferred embodiment of the present invention, network management information is mapped into a variety of virtual container (VC) such as VC-11, VC-12, VC-3, etc. These virtual containers are regarded as normal traffic, such as service D, as shown in FIG. 3. After the mapping, the virtual containers are cross-connected to STM-N line card 406 and then transmitted to a remote vendor A's system via other vendors' SDH system or communication network.

In the remote vendor A's system, the received network management information can be recovered by the similar means. In the above description, steps may be performed in any suitable order without departing from the scope of the invention.

In the present invention, for different bit rate data, different mappers will be used and here below some preferred mappers will be described in detail . Specially, when the adapted bit rate is 2.048Mbps (E1), 1.544Mbps (T1), 34.368Mbps (E3), or 44.736Mbps (T3), E1/T1 and E3/T3 are PDH interfaces and PDH mapper will be used; when the adapted bit rate is 10/100Mbps FE (Fast Ethernet), Ethernet over SDH/SONET Mapper will be used.

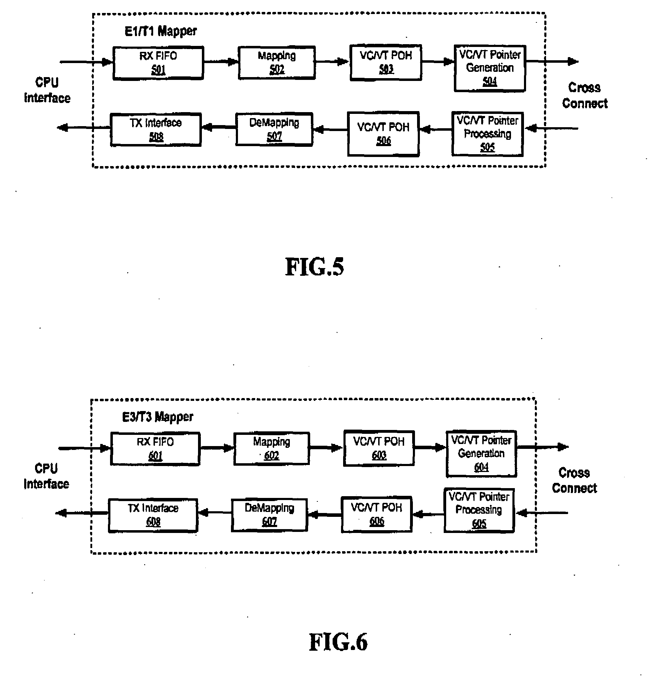

In some embodiments, as illustrated in FIG.5, E1/T1 Mapper is used for mapping and demapping E1 or T1 signals between PDH and SDH/SONET networks via VC-11/VC-12 or VTI.5/VT2 asynchronous mapping. E1/T1 Mapper can be realized by FPGA or commercial ASIC.

Similarly, FIG. 6 shows E3/T3 Mapper according to one embodiment of the present invention. E3/T3 Mapper is used for implementing mapping and demapping E3 or T3 signals between PDH and SDH/SONET networks via VC-3 or STS-1 asynchronous mapping. E3/T3 Mapper can also be realized by FPGA or commercial ASIC.

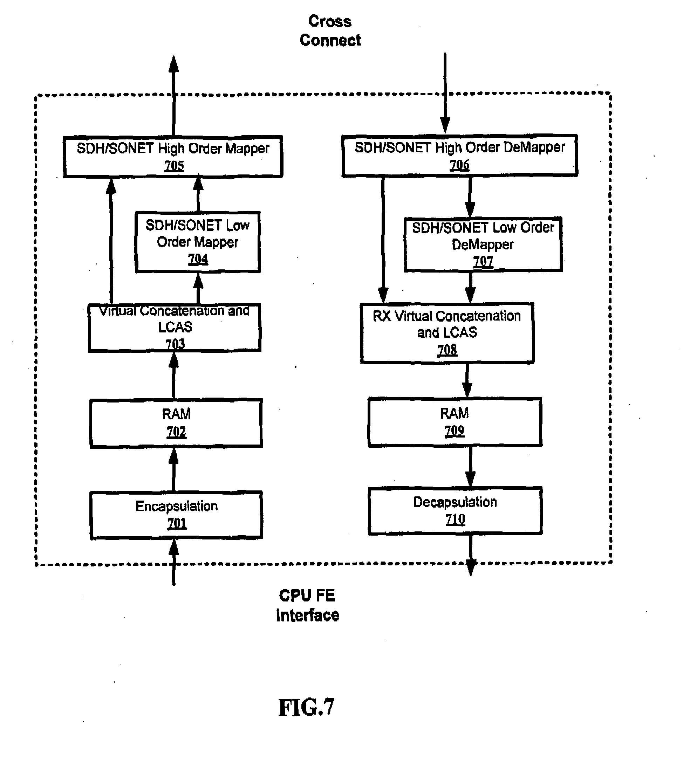

FIG7 is a block diagram showing the Ethernet over SDH/SONET Mapper, used for performing the mapping and demapping the information with the bit rate 10/100Mbps. In one preferred embodiment, Generic Framing Procedure (GFP) and Link Capacity Adjustment Scheme (LCAS) technology are adopted to realize the function of the mapper.

Generic Framing Procedure is defined by ITU-T G.7041, which allows mapping of variable length, higher-layer client signals over a transport network like SDH/SONET. Usually, GFP utilizes a length/HEC-based frame delineation mechanism that is more robust than that used by High-Level Data Link Control (HDLC), which is single octet flag based. Link Capacity Adjustment Scheme is a method to dynamically increase or decrease the bandwidth of virtual concatenated containers. The LCAS protocol is also specified in ITU-T G.7042. It allows on-demand increase or decrease of the bandwidth of the virtual concatenated group in a hitless manner. This brings bandwidth-on-demand capability for data clients like Ethernet when mapped into TDM containers. LCAS is also able to temporarily remove failed members from the virtual concatenation group. A failed member will automatically cause a decrease of the bandwidth and after repair the bandwidth will increase again in a hitless fashion. Together with diverse routing this provides survivability of data traffic without requiring excess protection bandwidth allocation.

In this embodiment, Ethernet frame is firstly encapsulated into Virtual Concatenation via GFP and then stored into RAM. LCAS can adapt the capacity of the Virtual Container dynamically and reallocate the bandwidth to meet the requirement of the data transmission. That is, LCAS offers network designers the ability to automatically fine tune the bandwidth so as to achieve the information communication.

Wile this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of the disclosure.

## Claims

1. A method of communicating information over an optical communication network, a plurality of communication system accessing the optical communication network via different nodes, comprising the step of:
creating traffic information according to network management information or transforming the format of the network management information to be the same as that of other traffic information in at least one communication system;
transmitting the traffic information over the optical communication network; and
receiving and recovering the traffic information in at least another communication system, wherein said at least another communication system has the similar information processing structure to that of said at least one communication system.

2. The method of claim 1, wherein creating traffic information according to a network management information further comprises:
adapting the bit rate of the network management information;
mapping the adapted network management information into the traffic information.

3. The method of claim 2, wherein the bit rate of the adapted network management information is 2.048Mbps, 1.544Mbps, 34.368Mbps, 44.736Mbps, or 10/100Mbps.

4. The method of claim 2, wherein if the bit rate of the adapted network management information is 2.048Mbps or 1.544Mbps, the adapted network management information is asynchronously mapped into Virtual Container VC-11/VC-12 or Virtual Tributary VT1.5/VT2.

5. The method of claim 2, wherein if the bit rate of the adapted network management information is 34.368Mbps or 44.736Mbps, the adapted network management information is asynchronously mapped into Virtual ContainerVC-3 or Synchronous Transport Signal STS-1.

6. The method of claim 2, wherein if the bit rate of the adapted network management information is 10/100Mbps, Generic Framing Procedure and Link Capacity Adjustment scheme are adopted to perform the mapping.

7. A system for communicating the information communication over an optical communication network, a plurality of communication system accessing the optical communication network via different nodes, comprising:
an information creation unit configured to cerate a network management information into a traffic information in at least one communication system;
an information transmission unit configured to transmit the traffic information over the optical communication network; and
an information recovery unit configured in at least another communication system, to receive and recover the traffic information, wherein said at least another communication system has the similar encoding and decoding structure as that of said at least one communication system.

8. The system of claim 7, wherein said information creation unit further comprises:
a bit rate adapter operable to adapt the bit rate of the network management information; and
a mapper operable to map the adapted network management information into the traffic information.

9. The system of claim 8, wherein the bit rate of the adapted network management information is 2.048Mbps, 1.544Mbps, 34.368Mbps, 44.736Mbps, or 10/100Mbps.

10. The system of claim 8, wherein the bit rate of the network management information is adapted by CPU included in the bit rate adapter and is output via CPU interfaces.

11. The system of claim 8, wherein if the bit rate of the adapted network management information is 2.048Mbps, 1.544Mbps, 34.368Mbps, or 44.736Mbps, Multi-channel Controller or Serial Communication Controller is employed as the CPU interface.

12. The system of claim 8, wherein if the bit rate of the adapted network management information is 10/100Mbps, Fast Communication controller is employed as the CPU interface.

13. The system of claim 8, wherein if the bit rate of the adapted network management information is 2.048Mbps, 1.544Mbps, 34.368Mbps, or 44.736Mbps, Plesiochronous Digital Hierarchy mapper is adopted to perform the mapping.

14. The system of claim 13, wherein the Plesiochronous Digital Hierarchy mapper is implemented by means of FPGA or commercial ASIC.

15. The system of claim 8, wherein if the bit rate of the adapted network management information is 10/100Mbps, Ethernet over SDH/SONET mapper is adopted to perform the mapping.

16. The system of claim 15, wherein Generic Framing Procedure and Link Capacity Adjustment scheme are employed for implementing the Ethernet over SDH/SONET mapper.

17. The system of claim 15 or claim 16, wherein the Ethernet over SDH/SONET mapper is implemented by means of FPGA or commercial ASIC.

18. A machine-readable medium including logic for communicating information over a communication network, and a plurality of communication system accessing the optical communication network via different nodes, the logic operable to:
create a traffic information according to a network management information in at least one communication system; transmit the traffic information over the optical communication network; and
receive and recover the traffic information in at least another communication system, wherein said at least another communication system has the similar encoding and
decoding structure as that of said at least one communication system.

19. The machine-readable medium of claim 18, wherein the logic is operable to:
adapt the bit rate of the network management information; and
map the adapted network management information into the traffic information.

20. The machine-readable medium of claim 19, wherein the bit rate of the adapted network management information is 2.048Mbps, 1.544Mbps, 34.368Mbps, 44.736Mbps, or 10/100Mbps.

21. The machine-readable medium of claim 19, wherein if the bit rate of the adapted network management information is 2.048Mbps or 1.544mbps, the adapted network management information is asynchronously mapped into Virtual Container VC-11/VC-12 or Virtual Tributary VT1.5/VT2.

22. The machine-readable medium of claim 19, wherein if the bit rate of the adapted network management information is 34.368Mbps or 44.736Mbps, the adapted network management information is asynchronously mapped into Virtual ContainerVC-3 or Synchronous Transport Signal STS-1.

23. The machine-readable medium of claim 19, wherein if the bit rate of the adapted network management information is 10/100Mbps, Generic Framing Procedure and Link Capacity Adjustment scheme are adopted to perform the mapping.
